(19) Europäisches Patentamt
European Patent Office
Office européen des brevets

(11) Veröffentlichungsnummer : **0 569 683 A1**

(12) # EUROPÄISCHE PATENTANMELDUNG

(21) Anmeldenummer : **93103987.9**

(22) Anmeldetag : **11.03.93**

(51) Int. Cl.[5] : **B32B 7/10,** C09J 175/06, B32B 27/34, B32B 27/36

(30) Priorität : **12.05.92 DE 4215609**

(43) Veröffentlichungstag der Anmeldung : **18.11.93 Patentblatt 93/46**

(84) Benannte Vertragsstaaten : **AT BE CH DE ES FR GB IT LI NL SE**

(71) Anmelder : **HÜLS AKTIENGESELLSCHAFT D-45764 Marl (DE)**

(72) Erfinder : **Mügge, Joachim, Dr. Kantstrasse 14 W-4358 Haltern (DE)**
Erfinder : **Röber, Stefan, Dr. Max-Reger-Strasse 138 W-4370 Marl (DE)**
Erfinder : **Feinauer, Roland, Dr. Flämingstrasse 34 W-4370 Marl (DE)**
Erfinder : **Jadamus, Hans, Dr. Hervester Strasse 9 W-4370 Marl (DE)**

(54) **Thermoplastische Mehrschichtverbunde.**

(57) Es sollen Mehrschichtverbunde mit verbesserter Beständigkeit gegen chemische Agenzien und verbesserter Kraftschlüssigkeit der Schichten zur Verfügung gestellt werden.

Dies wird durch

I. eine Schicht einer Formmasse auf Basis von Polyamid in Verbindung mit

II. einer Schicht einer Formmasse auf Basis eines modifizierten Polyesters

erreicht.

Mit Hilfe der Erfindung gelingt es, Mehrschichtverbunde mit dem gewünschten verbesserten Eigenschaftsbild zu erhalten.

EP 0 569 683 A1

Gegenstand der Erfindung sind thermoplastische Mehrschichtverbunde.

Polyamide bzw. Polyester sind für eine Reihe von Anwendungen ungeeignet.

Polyamide sind bespielsweise nicht witterungsbeständig, da sie unter Belichtung altern sowie Luftfeuchtigkeit aufnehmen. Dies führt zu Verfärbung, Verschlechterung der mechanischen Eigenschaften und Verzugserscheinungen. Obwohl Polyamide gute mechanische Eigenschaften, insbesondere gute Zähigkeit, aufweisen, haben sie eine schlechte Sperrwirkung; so können polare Substanzen leicht durch Polyamide migrieren. Dies ist beispielsweise bei Kraftstoffleitungen, in denen alkoholhaltiger Kraftstoff gefördert wird, äußerst nachteilig.

Polyester sind im allgemeinen gut witterungsbeständig und besitzen eine ausgezeichnete Sperrwirkung sowohl gegenüber polaren als auch unpolaren Medien. Sie sind jedoch in der Regel schlagempfindlich. Insbesondere die Kerbschlagzähigkeit ist nicht ausreichend. Deshalb können Polyester in vielen Fällen, in denen Eigenschaften wie ausgezeichnete Sperrwirkung, hohe Temperaturbeständigkeit und gute Zähigkeit erwünscht sind, nicht verwendet werden.

In DE-PS 38 27 092 wird ein Mehrschichtrohr beschrieben, das von innen nach außen Schichten aus Polyamid, Polyvinylalkohol, Polyamid und Polyester aufweist. Der Polyester wird hierbei nur in einer dünnen Außenschicht eingesetzt, um so eine höhere Kurzzeitwärmeformbeständigkeit zu erreichen. Es ist allerdings dem Fachmann bekannt, daß die weitaus meisten Polymere, so auch Polyamide und Polyester, miteinander unverträglich sind, weshalb bei der Herstellung von Mehrschichtverbunden keine Anhaftung zwischen den Laminatschichten erreicht wird. Ein kraftschlüssiger Verbund zwischen den einzelnen Polymerschichten ist aber bei technischen Anwendungen unbedingt erforderlich.

Aus EP-A-287 839 sind Mehrschichtverbunde aus besonderen Polyamidmischungen und verschiedenen anderen Thermoplasten, wie beispielsweise Polyethylenterephthalat, bekannt. Dort wird, um die unverzichtbare Haftung zwischen den beiden Schichten zu erzielen, ein Haftvermittler zwischen die Laminatschichten eingebracht. Als geeignete Haftvermittler werden funktionalisierte Polyolefine, funktionalisierte Ethylen/Vinylacetat-Copolymere, Ethylen/Acrylat-Copolymere, Ionomere, Polyalkylenoxid/Polyester-Blockcopolymere, Derivate von Carboxymethylcellulose sowie Blends dieser Polymeren mit Polyolefinen angegeben.

Es hat sich nun herausgestellt, daß diese Haftvermittler insbesondere im System Polyamid/Polyester keinen kraftschlüssigen Verbund ergeben. In den Fällen, in denen ein gewisser Kraftschluß erzielt werden kann, geht dieser beim Erwärmen oder bei Einwirkung von Lösemitteln verloren, da die Haftvermittler nicht ausreichend wärmeform- und lösemittelbeständig sind. Zudem versagen derartige Verbunde bei Scherbelastung durch kalten Fluß des Haftvermittlers.

Aufgabe der vorliegenden Erfindung war es, einen lösemittel- und temperaturbeständigen Verbund zwischen Polyester und Polyamid zu schaffen, der unempfindlich gegenüber Scherbeanspruchung ist und gute mechanische Eigenschaften besitzt. Insbesondere soll eine starke Kohäsion an den Phasengrenzflächen erzielt werden.

Diese Aufgabe wird gelöst durch thermoplastische Mehrschichtverbunde enthaltend

I. mindestens eine Schicht einer Formmasse auf Basis von Polyamid

und

II. mindestens eine Schicht einer Formmasse auf Basis eines Gemisches aus

- a. 99 bis 60 Gew.-% eines linearen, kristallinen Polyesters

  und

- b. 1 bis 40 Gew.-% einer mindestens zwei Isocyanatgruppen aufweisenden Verbindung

wobei die der Komponente II. b. entstammenden Isocyanatgruppen in der Komponente II. in einer Konzentration zwischen 0,03 und 3 Gew.-% enthalten sind,

und die beiden Schichten kraftschlüssig miteinander verbunden sind.

Die Komponente II. setzt sich zusammen aus 99 bis 60, vorzugsweise 98 bis 70, und insbesondere aus 97,5 bis 90 Gew.-% an Komponente II. a. und 1 bis 40, vorzugsweise 2 bis 30, und insbesondere 2,5 bis 10 Gew.-% an Komponente II. b. Die der Komponente II. b. entstammenden Isocyanatgruppen sind in der Komponente II. in einer Konzentration zwischen 0,03 und 3 Gew.-%, vorzugsweise zwischen 0,3 und 1,8 Gew.-% vorhanden.

Als Polyamide kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer $\alpha,\omega$-Aminocarbonsäure bzw. von dem davon abgeleitetem Lactam ausgegangen worden ist - H. Domininghaus, **Die Kunststoffe und ihre Eigenschaften,** Seite 272, VDI-Verlag (1976).]

Sofern Copolyamide verwendet werden, können diese z. B. Adipinsäure, Sebacinsäure, Korksäure,

Isophthalsäure, Terephthalsäure als Cosäure bzw. Bis(4'-aminocyclohexyl)-methan, Trimethylhexamethylendiamin, Hexamethylendiamin o. ä. Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatische/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Seiten 328 und 435 - Wiley & Sons (1982) beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität (η rel) im Bereich von 1,5 bis 2,8.

In einer bevorzugten Ausführungsform werden solche Polyamide für die Komponente I. verwendet, bei denen mindestens 50 % aller Endgruppen Aminogruppen darstellen.

Die genannten Polyamide werden für sich oder in Gemischen eingesetzt.

Die linearen, kristallinen Polyester (Komponente II. a) weisen nachstehende Grundstruktur auf

$$-\!\!\left[ O - R - O - \overset{\overset{O}{\|}}{C} - R' - \overset{\overset{O}{\|}}{C} \right]\!\!- \quad ;$$

dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel

$$HO -\!\!\left[ R'' - O \right]_x\!\!- H \quad ,$$

wobei R" einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure in Frage.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie**, 4. Aufl., Bd. 19, Seite 65 ff. - Verlag Chemie GmbH, Weinheim, 1980).

Die erfindungsgemäß eingesetzten Polyester weisen eine Viskositätszahl (J-Wert) im Bereich von 80 bis 240 $cm^3/g$ auf.

Die Polyamide (Komponente I.) und/oder die linearen, kristallinen Polyester (Komponente II.a.) können bis zu 40 Gew.-% andere Thermoplaste enthalten, sofern diese die Verbundfähigkeit nicht stören. Insbesondere seien hier Polycarbonat [H. Schnell, **Chemistry and Physics of Polycarbonates**, Interscience Publishers, New York (1981)], Acrylnitril/Styrol/ Butadien- (Houben-Weyl, **Methoden der organischen Chemie,** Bd. 14/1, Georg Thieme Verlag Stuttgart, S. 393 - 406; **Ullmanns Encyclopädie der technischen Chemie,** 4. Auflage, Bd. 19, Verlag Chemie Weinheim (1981), S. 279 - 284), Acrylnitril/Styrol/Acrylat- (**Ullmanns Encyclopädie der technischen Chemie,** 4. Auflage, Bd. 19, Verlag Chemie Weinheim (1981), S. 277 - 295), Acrylnitril/Styrol-Copolymerisat (**Ullmanns Encyclopädie der technischen Chemie,** 4. Auflage, Bd. 19, Verlag Chemie Weinheim (1981), S. 273 ff.) oder Polyphenylenether (DE-OSS 32 24 691 u. 32 24 692, US-PSS 3 306 874, 3 306

875 u. 4 028 341) genannt.

Sofern erforderlich können die Polyamide und/oder Polyester schlagzäh eingestellt werden. Geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen $T_g < -10$ °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Als Komponente II.b. werden Verbindungen eingesetzt, die mindestens zwei Isocyanatgruppen tragen. Als solche eignen sich di- und höherfunktionelle Isocyanate, insbesondere aromatische und (cyclo-)aliphatische Isocyanate wie beispielsweise 1,4-Phenylendiisocyanat, 2,4-Toluylendiisocyanat, 2,6-Toluylendiisocyanat, 1,5-Naphthylendiisocyanat, 1,6-Hexamethylendiisocyanat, Diphenylmethan-2,4-diisocyanat, Diphenylmethan-4,4'-diisocyanat, Diphenylmethan-2,2'-diisocyanat, Isophorondiisocyanat, 1,4-Tetramethylendiisocyanat, 1,12-Dodecandiisocyanat und Triphenylmethan-4,4',4"-triisocyanat. Weitere Beispiele sind Cyclohexan-1,3-diisocyanat, Cyclohexan-1,4-diisocyanat, Cyclobutan-1,3-diisocyanat, 2,4-Hexahydrotoluylendiisocyanat, 2,6-Hexahydrotoluylendiisocyanat, Hexahydro-1,3-phenylendiisocyanat, Hexahydro-1,4-phenylendiisocyanat, Norbonandiisocyanat, p- oder m-Xylylendiisocyanate, Perhydro-2,4-diphenylmethandiisocyanat und Perhydro-4,4'-diphenylmethandiisocyanat.

Geeignet sind auch Isocyanate, die Isocyanurat-, Urethan-, acylierte Harnstoff-, Biuret-, Carbodiimid- oder Estergruppen aufweisen. Ferner können oligomere Fettsäure enthaltende Isocyanate oder perchlorierte Arylisocyanate verwendet werden.

Die Isocyanate können auch als blockierte Isocyanate eingesetzt werden. Als Beispiel seien Umsetzungsprodukte der oben genannten Isocyanate mit Diolen, Lactamen oder Oximen angeführt.

Bevorzugt werden 2,4- und 2,6-Toluylendiisocyante sowie Isocyanate, die Isocyanurat-, Urethan-, Harnstoff- oder Biuretgruppen aufweisen. Weiterhin bevorzugt werden Isophorondiisocyanate und davon abgeleitete Isocyanurate sowie daraus hergestellte Mischungen.

Die Herstellung der Komponente II. erfolgt nach üblichen und bekannten Verfahren durch Schmelzemischen der Komponenten II.a. und II.b. in einem gut knetenden Mischaggregat, wie z. B. einem Doppelschneckenkneter, bei Temperaturen, die sich nach den Schmelzpunkten der Komponenten II.a. und II.b. richten, im allgemeinen bei Temperaturen zwischen 200 und 300 °C.

Bei der Herstellung der Komponente II. können die bei der Verarbeitung von Isocyanaten üblichen und bekannten Katalysatoren eingesetzt werden.

Die Komponente II. sollte vor der Herstellung der thermoplastischen Mehrschichtverbunde trocken und unter Ausschuß von Luftfeuchtigkeit gelagert werden.

Die oben beschriebene Herstellung der Komponente II. kann auch direkt in einem Speiseextruder der zur Herstellung der thermoplastischen Mehrschichtverbunde verwendeten Coextrusionsanlage oder Spritzgußanlage erfolgen, so daß die Komponente II. direkt im Anschluß an ihre Herstellung - ohne weitere Zwischenlagerung - zu einer Schicht des thermoplastischen Mehrschichtverbundes verarbeitet werden kann.

Der Komponente I. sowie Komponente II. können übliche Hilfs- und Zusatzstoffe wie z. B. Flammschutzmittel, Stabilisatoren, Verarbeitungshilfsmittel, Viskositätsverbesserer, Füllstoffe, Pigmente o. ä. zugefügt werden. Die Menge der genannten Mittel ist so zu dosieren, daß die gewünschten Eigenschaften nicht ernsthaft beeinflußt werden.

Die Fertigung der Mehrschichtverbunde kann ein- oder mehrstufig erfolgen.

Beim einstufigen Spritzgießverfahren bringt man die verschiedenen Schmelzen in einer Form zusammen und läßt das Formteil erkalten (Mehrkomponentenspritzguß).

Beim einstufigen Extrusionsverfahren werden in üblicher Weise die verschiedenen Schmelzen coextrudiert.

Bei den mehrstufigen Verfahren wird zunächst ein Formteil entweder aus der Komponente I. oder der Komponente II. hergestellt und dann mit den übrigen Komponenten durch Pressen, Spritzgießen oder Extrudieren verbunden.

Die erfindungsgemäßen Mehrschichtverbunde weisen in hervorragendem Maße eine gute Beständigkeit sowie gute Sperrwirkung gegen Diffusion gegenüber chemischen Agenzien, Lösemitteln und Kraftstoffen auf. Ferner sind die beiden Schichten kraftschlüssig miteinander verbunden, so daß z. B. bei thermischer Ausdehnung oder Biegen eines Rohres kein Abscheren der verschiedenen Schichten voneinander auftritt. Ferner ist es auch möglich, Werkstoffe herzustellen, welche die erfindungsgemäßen Mehrschichtverbunde mehrfach übereinander (alternierend) enthalten.

Die erfindungsgemäßen Mehrschichtverbunde finden bei Konstruktionsteilen vor allem im Bereich der Elektro-, Maschinenbau- und Automobilindustrie dort Verwendung, wo die Steifigkeit des Polyesters mit der Zähigkeit des Polyamids kombiniert werden soll oder wo die nachteiligen Eigenschaften des Polyamids wie mangelnde UV-Beständigkeit, nicht ausreichend Kratzfestigkeit oder schlechte Sperrwirkung durch eine Beschichtung aus Polyester ausgeglichen werden soll. Insbesondere finden sie auch Anwendung als Folien, vor allem als Lebensmittelverpackungsfolien oder als Hohlprofile, z. B. als Rohre, Tankeinfüllstutzen oder als Hohlkörper, z. B. als Kraftstofftanks, im Bereich der KFZ-Industrie.

Die in den Beispielen aufgeführten Ergebnisse wurden mit Hilfe nachstehender Meßverfahren bestimmt.

Die **Bestimmung der Lösungsviskosität** (rel. Viskosität $_{rel}$) der **Polyamide** erfolgt unter Verwendung einer 0,5 Gew.-%igen m-Kresol-Lösung bei 25 °C gemäß DIN 53 727/ISO 307.

Zur **Bestimmung der Aminoendgruppen** wird 1 g der Komponente I. in 50 ml m-Kresol bei 25 °C gelöst. Die Lösung wird mit Perchlorsäure potentiometrisch titriert.

Zur **Bestimmung der Carboxylendgruppen** in der Komponente I. wird 1 g Polykondensat in 50 ml Benzylalkohol unter Stickstoffabdeckung bei 165 °C gelöst. Die Lösezeit betragt maximal 20 min. Die Lösung wird mit einer Lösung von KOH in Ethylenglykol (0,05 mol KOH/l) gegen Phenolphthalein bis zum Farbumschlag titriert.

Die **Bestimmung der Lösungsviskosität** (Viskositätszahl J) **der Polyester** erfolgt in einer 0,5 Gew.-%igen Phenol/o-Dichlorbenzol-Lösung (Gewichtsverhältnis 1 : 1) bei 25 °C gemäß DIN 53 728/ ISO 1628/5 - Teil 5.

Für die **Bestimmung der Isocyanatgruppen** werden 6 g der Komponente II. (Polyester + Isocyanat) bei 180 °C in einem Gemisch aus Dichlorbenzol/Dibutylamin (80 : 20 Vol.-%) gelöst. Die Lösung wird bei 20 °C mit 10 %-iger Salzsäure gegen Bromphenol als Indikator titriert (DIN 53 185).

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Mit Buchstaben gekennzeichnete Beispiele sind nicht erfindungsgemäß.-

**Beispiele**

**A. Komponente I.**

**A 1:** Polyamid 12 ($\eta_{rel}$: 2,08; 30 % der Endgruppen Aminogruppen; 16 mmol/kg Aminoendgruppen; 36 mmol/kg Carboxyl-Endgruppen)

**A 2:** Polyamid 12 ($\eta_{rel}$: 2,10; 30 % der Endgruppen Aminogruppen; 15 mmol/kg Aminoendgruppen; 34 mmol/kg Carboxyl-Endgruppen; modifiziert mit 15 Gew.-% handelsüblichem Weichmacher)

**A 3:** Polyamid 6.12 ($\eta_{rel}$: 1,9; 88 % der Endgruppen Aminogruppen; 93 mmol/kg Aminoendgruppen; 29 mmol/kg Carboxyl-Endgruppen)

**A 4:** Polyamid 6 ($\eta_{rel}$: 2,01; 51,6 % der Endgruppen Aminogruppen; 33 mmol/kg Aminoendgruppen; 31 mmol/kg Carboxyl-Endgruppen)

**A 5:** Polyamid 12 ($\eta_{rel}$: 1,9; 86 % der Endgruppen Aminoendgruppen; 60 mmol/kg Aminoendgruppen; 10 mmol/kg Carboxyl-Endgruppen)

**A 6:** Polyamid 12 ($\eta_{rel}$: 2,0; 86,2 % der Endgruppen Aminogruppen; 50 mmol/kg Aminoendgruppen; 8 mmol/kg Carboxyl-Endgruppen; modifiziert mit 15 Gew.-% handelsüblichem Weichmacher)

**B. Komponente II.**

**B 1:** Homopolybutylenterephthalat (J-Wert: 165 $cm^3/g$; VESTODUR$^R$ 3000 - HÜLS AG; NCO-Gehalt = 0)

**B 2:** Homopolybutylenterephthalat (J-Wert: 145 $cm^3/g$; VESTODUR$^R$ 2000 - HÜLS AG; NCO-Gehalt = 0)

**B 3:** Homopolyethylenterephthalat (POLYCLEAR$^R$ TR 86 - HOECHST AG; NCO-Gehalt = 0)

**B 4:** Mischung aus

a. 80 Gew.-% Homopolybutylenterephthalat (J-Wert 110 $cm^3/g$)
und
b. 20 Gew.-% Maleinsäure- modifiziertes EPM (Gehalt an Maleinsäureanhydrid: 0,7 Gew.-% bezogen auf Komponente II. b.) NCO-Gehalt der Mischung B 4 = 0

**B 5:** Homopolybutylenterephthalat (J-Wert: 115 $cm^3/g$; VESTODUR[R] 1000 - HÜLS AG; NCO-Gehalt = 0)

**B 6:** Mischung aus

a. 90 Gew.-% Homopolybutylenterephthalat (J-Wert 115 $cm^3/g$; VESTODUR[R] 1000 - HÜLS AG) und

b. 10 Gew.-% Isocyanurat des Isophorondiisocyanat (trimeres Isocyanat mit 12 Gew.-% NCO-Endgruppen bezogen auf Komponente II. b.)

NCO-Gruppen-Konzentration in der Komponente II.: 0,6 Gew.-%.

**B 7:** Mischung aus

a. 95 Gew.-% Homopolybutylenterephthalat (J-Wert 115 $cm^3/g$; VESTODUR[R] 1000 - HÜLS AG) und

b. 5 Gew.-% Isocyanurat des Isophorondiisocyanat (trimeres Isocyanat mit 12 Gew.-% NCO-Endgruppen bezogen auf Komponente II. b.)

NCO-Gruppen-Konzentration in der Komponente II.: 0,3 Gew.-%.

**B 8:** Mischung aus

a. 95 Gew.-% Homopolybutylenterephthalat (J-Wert 145 $cm^3/g$; VESTODUR[R] 2000 - HÜLS AG) und

b. 5 Gew.-% einer Mischung bestehend aus

41,4 Gew.-% Caprolactam

33,7 Gew.-% Isocyanurat des Isophorondiisocyanats

24,9 Gew.-% Isophorondiisocyanat

mit 14,8 - 15,8 Gew.-% NCO-Endgruppen bezogen auf Komponente II.b.

NCO-Gruppen-Konzentration in der Komponente II.: 0,35 Gew.-%.

**B 9:** Mischung aus

a. 97,5 Gew.-% Homopolybutylenterephthalat (J-Wert 115 $cm^3/g$; VESTODUR[R] 1000 - HÜLS AG) und

b. 2,5 Gew.-% einer Mischung bestehend aus

41,4 Gew.-% Caprolactam

33,7 Gew.-% Isocyanurat des Isophorondiisocyanats

24,9 Gew.-% Isophorondiisocyanat

mit 14,8 - 15,8 Gew.-% NCO-Endgruppen bezogen auf Komponente II.b.

NCO-Gruppen-Konzentration in der Komponente II.: 0,17 Gew.-%.

**C. Herstellung der Mehrschichtverbunde**

Es wurden sowohl zweischichtige Folien mittels Coextrusion als auch zweischichtige Preßplatten hergestellt.

Die Herstellung der zweischichtigen Folien erfolgte in einer Labor-Co-extrusionanlage, deren zwei Speiseextruder Schneckendurchmesser von 25 mm bzw. 30 mm aufweisen. Die Zylindertemperaturen lagen bei 220 °C (A 2, A 5, A 6), 230 °C (A 1), 240 °C (A 3), 250 °C (B 1, B 2, B 3, B 4, B 5, B 6, B 7, B 8, B 9). Die Schichtdicken betrugen jeweils 0,5 mm.

Die Herstellung der Preßverbunde erfolgte in einer Laborpresse bei 270 °C und mit einer Preßzeit von 5 min (Pressdruck: 80 bar).

Tabelle

| Versuch | Komponente I | Komponente II | an Grenzfläche mechanisch trennbar | | | | |
|---|---|---|---|---|---|---|---|
| | | | Zweischichtfolie nach Lagerung | | | Preßplatte nach Lagerung | |
| | | | bei 23 °C | bei 150 °C | in M15* | bei 23 °C | in M15* |
| A | A 1 | B 1 | ja | ja | ja | ja | ja |
| B | A 2 | B 2 | ja | ja | ja | ja | ja |
| C | A 3 | B 3 | ja | ja | ja | ja | ja |
| D | A 1 | B 4 | ja | ja | ja | ja | ja |
| E | A 4 | B 1 | ja | ja | ja | ja | ja |
| F | A 5 | B 5 | ja | ja | ja | ja | ja |
| 1 | A 1 | B 6 | nein | nein | nein | nein | nein |
| 2 | A 2 | B 6 | nein | nein | nein | nein | nein |
| 3 | A 5 | B 6 | nein | nein | nein | nein | nein |
| 4 | A 6 | B 7 | nein | nein | nein | nein | nein |
| 5 | A 5 | B 7 | nein | nein | nein | nein | nein |
| 6 | A 1 | B 8 | nein | nein | nein | nein | nein |
| 7 | A 6 | B 8 | nein | nein | nein | nein | nein |
| 8 | A 6 | B 9 | nein | nein | nein | nein | nein |
| 9 | A 3 | B 9 | nein | nein | nein | nein | nein |

*) Lagerung bei 23 °C während 5 Tage in Normkraftstoff M 15 (42,5 Vol.-Tle. Isooctan, 42,5 Vol.-Tle. Toluol und 15 Vol.-Tle. Methanol).

## Patentansprüche

1. Thermoplastischer Mehrschichtverbund enthaltend
   I. mindestens eine Schicht einer Formmasse auf Basis von Polyamid,

und
II. mindestens eine Schicht einer Formmasse auf Basis eines Gemisches aus
a. 99 bis 60 Gew.-% eines teilkristallinen thermoplastischen Polyesters
und
b. 1 bis 40 Gew.-% einer mindestens zwei Isocyanatgruppen aufweisenden Verbindung,
wobei die der Komponente II. b. entstammenden Isocyanatgruppen in der Komponente II. in einer Konzentration zwischen 0,03 und 3 Gew.-% enthalten sind,
und die beiden Schichten kraftschlüssig miteinander verbunden sind.

**2.** Thermoplastischer Mehrschichtverbund nach Anspruch 1,
dadurch gekennzeichnet,
daß bei dem Polyamid der Komponente I. mindestens 50 % aller vorhandenen Endgruppen Aminogruppen sind.

**3.** Thermoplastischer Mehrschichtverbund nach den Ansprüchen 1 und 2,
dadurch gekennzeichnet,
daß die Komponente II. eine Formmasse auf Basis eines Gemisches aus
a. 98 bis 70 Gew.-% eines linearen teilkristallinen Polyesters
und
b. 2 bis 30 Gew.-% einer mindestens zwei Isocyanatgruppen aufweisenden Verbindung
darstellt.

**4.** Thermoplastischer Mehrschichtverbund nach den Ansprüchen 1 und 2,
dadurch gekennzeichnet,
daß die Komponente II. eine Formmasse auf Basis eines Gemisches aus
a. 97,5 bis 90 Gew.-% eines linearen teilkristallinen Polyesters
und
b. 2,5 bis 10 Gew.-% einer mindestens zwei Isocyanatgruppen aufweisenden Verbindung
darstellt.

**5.** Thermoplastischer Mehrschichtverbund nach den Ansprüchen 1 bis 4,
dadurch gekennzeichnet,
daß die der Komponente II.b. entstammenden Isocyanatgruppen in der Komponente II. in einer Konzentration zwischen 0,3 und 1,8 Gew.-% vorhanden sind.

**6.** Thermoplastischer Mehrschichtverbund nach den Ansprüchen 1 bis 5,
dadurch gekennzeichnet,
daß die Isocyanate der Komponente II. b. Isocyanurat-, Urethan-, acylierte Harnstoff-, Biuret-, Carbodiimid- oder Estergruppen aufweisen.

**7.** Thermoplastischer Mehrschichtverbund nach den Ansprüchen 1 bis 5,
dadurch gekennzeichnet,
daß die Komponente II. b. Isophorondiisocyanat und/oder ein daraus abgeleitetes Isocyanurat enthält.

**8.** Thermoplastischer Mehrschichtverbund nach den Ansprüchen 1 bis 7,
dadurch gekennzeichnet,
daß die Komponente II. b. ein durch im Lactam blockiertes Isocyanat enthält.

**9.** Verwendung des thermoplastischen Mehrschichtverbundes nach den Ansprüchen 1 bis 8 in Formteilen.

**10.** Verwendung des thermoplastischen Mehrschichtverbundes nach Anspruch 9,
dadurch gekennzeichnet,
daß er in einem Formteil mehrfach eingesetzt ist.

**11.** Verwendung des thermoplastischen Mehrschichtverbundes nach den Ansprüchen 9 und 10 für Hohlprofile.

Europäisches Patentamt

# EUROPÄISCHER RECHERCHENBERICHT

Nummer der Anmeldung
EP 93 10 3987

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 071 142 (BAYER AG) * Seite 5, Zeile 7 - Seite 9, Zeile 29; Ansprüche 1,3 * | 1,3-7 | B32B7/10 C09J175/06 B32B27/34 B32B27/36 |
| Y | * Seite 24, Zeile 9 - Seite 25, Zeile 15 * | 2,9-11 | |
| X | EP-A-0 384 404 (PRESIDENZA DEL CONSIGLIO DEL MINISTRI - UFFICIO DEL MINISTRO ...) * Seite 2, Zeile 9 - Zeile 46; Ansprüche 1,3,4,6,10; Beispiel 2 * * Seite 3, Zeile 1 - Zeile 56 * | 1,3-5,7 | |
| Y | GB-A-1 547 480 (HENKEL KG) | 2 | |
| A | * Seite 1, Zeile 25 - Zeile 49; Ansprüche 1,8; Beispiel 3 * * Seite 2, Zeile 33 - Zeile 38 * | 1,5,7 | |
| X | NL-A-7 512 917 (DR. KURT HERBERTS & CO. GMBH) * Seite 1, Zeile 5 - Seite 2, Zeile 4; Ansprüche 1,6 * * Seite 5, Zeile 33 - Seite 6, Zeile 17 * * Seite 16, Zeile 25 - Zeile 31 * | 1,3-5,9 | RECHERCHIERTE SACHGEBIETE (Int. Cl.5) |
| X | DE-A-3 234 590 (DAI-ICHI KOGYO SEIYAKU CO., LTD.) | 1,4,6,8 | B32B C09J |
| A | * Seite 14, Zeile 1 - Zeile 23; Ansprüche 1,4,5; Beispiele 10-12 * | 5 | |
| A | DE-A-2 822 394 (LORD CORP.) * Seite 6, Absatz 3 - Seite 7, Zeile 34; Ansprüche 1,4-6; Beispiel * | 5-7 | |
| Y | EP-A-0 225 049 (TEIJIN LTD.) * Seite 4, Zeile 16 - Zeile 44 * | 9-11 | |

Der vorliegende Recherchenbericht wurde für alle Patentansprüche erstellt

| Recherchenort | Abschlußdatum der Recherche | Prüfer |
|---|---|---|
| DEN HAAG | 14 APRIL 1993 | DERZ T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)